# EUROPÄISCHE PATENTANMELDUNG

(11) **EP 4 755 740 A1**
(43) Veröffentlichungstag der Anmeldung: **10.06.2026**
(21) Anmeldenummer: 25214304.5
(22) Anmeldetag: 07.11.2025
(51) Int. Cl.: B60W 30/00, B60W 30/12, B60W 30/14, B60W 50/00

(54) **SYSTEM MIT EINEM KRAFTFAHRZEUG UND MIT EINEM SERVER, SOWIE VERFAHREN ZUM BETRIEB DES SYSTEMS**

(30) Priorität: 09.12.2024 DE 102024136739
(71) Anmelder: Volkswagen Aktiengesellschaft, 38440 Wolfsburg (DE)
(72) Erfinder: Kaste, Jonas, 38440 Wolfsburg (DE); Stahl, Felix, 38440 Wolfsburg (DE); Aminev, Timur, 38440 Wolfsburg (DE)

(57) **Zusammenfassung**

Die Erfindung betrifft ein zum Betrieb eines Systems (2) mit einem Kraftfahrzeug (4) sowie mit einem Server (6), wobei Schwarmdaten (D) mit Datensätzen (S) auf dem Server bereitgestellt sind, wobei jeder Datensatz (S) eine, insbesondere dem aktuellen Ort des Kraftfahrzeugs (4) zugeordnete, erste Größe (G1) über eine Längsdynamik und/oder eine, insbesondere dem aktuellen Ort des Kraftfahrzeugs (4) zugeordnete, zweite Größe (G2) über einen gefahrenen Pfad darstellt, wobei die Datensätze (S) in Abhängigkeit deren erster Größe (G1) oder in Abhängigkeit deren zweiter Größe (G2) in Untergruppen (U1,U2) eingeteilt werden, wobei aus einer Anzahl vordefinierter Fahrerprofile (P) eines der Fahrerprofile (P1,P2) anhand einer Eingabe (E) ausgewählt wird, wobei dem gewählten Fahrerprofil (P1,P2) eine der Untergruppen (U1g,U2g) zugeordnet wird, wobei anhand der ersten Größen (G1) und/oder zweiten Größen (G2) derjenigen Datensätze (S), welche in die dem gewählten Fahrerprofil (p1,P2) zugeordnete Untergruppe (U1g,U2g) eingeteilt sind, eine erste Steuergröße (SG,SG') für ein Fahrerassistenzsystem (8) zur automatischen Längsführung und/oder automatischen Querführung bestimmt wird, wobei das Kraftfahrzeug (4) anhand des Fahrerassistenzsystem (8) in Abhängigkeit der ersten Steuergröße (SG;SG') automatisch längs- und/oder querführt wird.

## Beschreibung

Die Erfindung betrifft ein Verfahren zum Betrieb eines Systems, das ein Kraftfahrzeug mit einem Fahrerassistenzsystem zur automatischen Längs- und/oder Querführung sowie einen Server mit Schwarmdaten aufweist. Des Weiteren betrifft die Erfindung ein solches System.

Manche Kraftfahrzeuge weisen ein Fahrerassistenzsystem auf. Solche Fahrerassistenzsysteme dienen dazu, den Fahrer bei bestimmten Fahraufgaben zu unterstützen und/oder eine Fahraufgabe zu übernehmen. Beispielsweise stellt das Fahrerassistenzsystem eine Funktion für eine automatische Längsführung, beispielsweise im Rahmen eines Abstandstempomats, und/oder für eine automatische Querführung, beispielsweise im Rahmen einer Spurführung entlang einer Spurmitte, bereit.

Weiterhin ist es bekannt, sogenannte Schwarmdaten für das Fahrerassistenzsystem zu nutzen. Schwarmdaten sind dabei Daten, die von Kraftfahrzeugen bereitgestellt wurden. Die Daten stellen dabei zweckmäßig jeweils eine gefahrene Straße und eine Informationen über die Fahrt auf der Straße dar. Die Information wird dabei vom Kraftfahrzeug anhand eines Sensors und/oder einer Kamera bestimmt. Beispielsweise stellt die Information den auf der Straße tatsächlich gefahrenen Pfad (gefahrene Spur), insbesondere repräsentiert durch den Abstand zu einer Spurmarkierung der Straße, einen Geschwindigkeitsverlauf und/oder einen Beschleunigungsverlauf des Kraftfahrzeugs entlang des gefahrenen Pfads dar.

Beispielsweise kann anhand der Schwarmdaten die Verfügbarkeit eines bestehenden Fahrerassistenzsystems erhöht werden. So können Schwarmdaten verwendet werden, um Daten über den zu fahrenden Kurs (Pfad) abzuleiten und eine Spurführung entsprechend dieses abgeleiteten Kurses zu ermöglichen, auch wenn keine Spurmarkierungen auf der Straße vorhanden sind, die typischerweise zur Bestimmung des zu fahrenden Kurses verwendet werden.

Schwarmdaten haben weiterhin den Vorteil, dass diese Daten realer Fahrten umfassen. Somit können anhand der Schwarmdaten Daten oder Größen zur Steuerung des Kraftfahrzugs mittels des Fahrerassistenzsystems bestimmt werden, die ein vergleichsweise menschliches und vom Fahrer als vergleichsweise angenehm empfundenes Verhalten darstellen.

Unterschiedliche Fahrer können jedoch unterschiedliche Präferenzen aufweisen. So wird beispielsweise ein sportlicher Fahrer ein anderes Beschleunigungsverhalten als angenehm empfinden, als ein Fahrer, der eine kraftstoffsparende Fahrweise bevorzugt. Diese unterschiedlichen Präferenzen können auch bei der Verwendung von Schwarmdaten für das Fahrerassistenzsystem zu einer Verringerung dessen Akzeptanz durch den Fahrer führen.

In der DE 10 2021 207 781 A1 ist ein Verfahren zum Adaptieren einer assistierten oder automatisierten Fahrfunktion eines Fahrzeugs beschrieben. Beim Verfahren wird ein Fahrverhalten eines Fahrers des Fahrzeugs in wenigstens einer Fahrsituation erfasst und das erfasste Fahrverhaltens des jeweiligen Fahrers ausgewertet, um eine individuelle Fahrweise des jeweiligen Fahrers zu ermitteln. Weiterhin wird ein spezieller Parametersatz für die assistierte oder automatische Fahrfunktion des Fahrzeugs ermittelt, der eine der individuellen Fahrweise des jeweiligen Fahrers angepasste Fahrweise der assistierten oder automatisierten Fahrfunktion des Fahrzeugs bewirkt, und es wird der spezielle Parametersatz zum Modifizieren eines vorhandenen Parametersatzes der assistierten oder automatisierten Fahrfunktion des Fahrzeugs verwendet.

Aus der DE 10 2022 211 433 A1 ist ein Fahrerassistenzsystem für ein Fahrzeug bekannt, wobei das Fahrerassistenzsystem dazu eingerichtet ist, dass Steuergrößen und/oder Parameter des Fahrerassistenzsystems anhand von auswählbaren Fahrprofilen festgelegt werden können, wobei mindestens ein Fahrprofil auswählbar ist, bei dem die Steuergrößen und/oder Parameter des Fahrerassistenzsystems positionsabhängig mit Hilfe von Schwarmdaten festgelegt werden.

Der Erfindung liegt die Aufgabe zugrunde, ein besonders geeignetes Verfahren zum Betrieb eines Systems mit einem Kraftfahrzeug und mit einem Server anzugeben. Insbesondere soll anhand des Verfahrens eine automatische Längs- und/oder Querführung an eine Erwartung eines Fahrers anpassbar sein. Des Weiteren soll ein solches System angegeben werden.

Bezüglich des Verfahrens wird die Aufgabe durch die Merkmale des Anspruchs 1 erfindungsgemäß gelöst. Hinsichtlich des Systems wird die Aufgabe mit den Merkmalen des Anspruchs 10 erfindungsgemäß gelöst. Vorteilhafte Ausgestaltungen und Weiterbildungen sind Gegenstand der Unteransprüche. Dabei gelten die Ausführungen im Zusammenhang mit dem Verfahren sinngemäß auch für das System und umgekehrt.

Das Verfahren dient dem Betrieb eines Systems, welches ein Kraftfahrzeug mit einem Fahrerassistenzsystem für eine automatische Längs- und/oder Querführung sowie einen fahrzeugexternen Server aufweist. Dieses Kraftfahrzeug des Systems wird im Folgenden zur besseren Unterscheidbarkeit zu anderen Fahrzeugen auch als "Ego-Fahrzeug" bezeichnet.

Insbesondere ist unter "automatischer Längs- und/oder Querführung" eine assistierende Längs- oder Querführung entsprechend Level 1 der Norm SAE J3016, eine der teilautomatische Längs- und/oder Querführung entsprechend Level 2 der Norm SAE J3016, eine bedingt automatische Längs- und/oder Querführung entsprechend Level 3 der Norm SAE J3016, eine hochautomatische Längs- und/oder Querführung entsprechend Level 4 der Norm SAE J3016 und/oder eine vollautomatische Längs- und/oder Querführung Längs- und/oder Querführung entsprechend Level 5 der Norm SAE J3016 zu verstehen. Analoges gilt zweckmäßig für "automatisch längs- und/oder quergeführt".

Beispielsweise wird das Kraftfahrzeug, insbesondere lediglich, anhand des Fahrerassistenzsystems längsgeführt, wobei der Fahrer die Querführung selbst durchführt.

Weiter beispielsweise ist das Kraftfahrzeug, insbesondere lediglich, anhand des Fahrerassistenzsystems quergeführt, wobei der Fahrer die Längsführung selbst durchführt.

Weiter beispielsweise ist das Kraftfahrzeug, insbesondere lediglich, anhand des Fahrerassistenzsystems sowohl längs- als auch quergeführt, wobei der Fahrer, beispielsweise zeitweise und/oder situationsabhängig, weder die Längsführung noch die Querführung durchführt.

Verfahrensgemäß sind auf dem Server Schwarmdaten bereitgestellt. Die Schwarmdaten wurden beispielsweise vorab von einer Vielzahl von Kraftfahrzeugen an den Server übertragen und/oder wurden anhand den von diesen Fahrzeugen übertragen Daten berechnet. Die Schwarmdaten umfassen dabei Datensätze, wobei jeder Datensatz eine, insbesondere dem aktuellen Ort des Kraftfahrzeugs, also des Ego-Fahrzeugs, zugeordnete erste Größe und/oder eine, insbesondere dem aktuellen Ort des Kraftfahrzeugs, also des Ego-Fahrzeugs, zugeordnete zweite Größe darstellt. Hierunter ist insbesondere zu verstehen, dass die erste Größe und/oder die zweite Größe selbst in den Datensätzen vorhanden ist oder jeweils anhand der Datensätze bestimmt werden kann und zweckmäßig wird. Der aktuelle Ort des Kraftfahrzeugs wird insbesondere anhand eines Navigationssystems und/oder anhand von GPS (Global Positioning System) bestimmt.

Die erste Größe ist eine Größe über eine Längsdynamik des Kraftfahrzeugs, insbesondere am aktuellen Ort des Kraftfahrzeugs. Also beschreibt die erste Größe die Längsdynamik desjenigen Kraftfahrzeugs, welches den Datensatz an den Server übertragen hat. Beispielsweise ist oder repräsentiert die erste Größe eine Geschwindigkeit dieses Kraftfahrzeugs und/oder einer eine Längsbeschleunigung dieses Kraftfahrzeugs.

Unter "Beschleunigung" ist hier die Änderung der Geschwindigkeit zu verstehen und kann entsprechend sowohl eine Erhöhung der Geschwindigkeit als auch eine Reduktion der Geschwindigkeit (Bremsen) sein.

Die zweite Größe ist eine Größe über einen, insbesondere am aktuellen Ort des Kraftfahrzeugs, gefahrenen Pfad. Also beschreibt die zweite Größe den Pfad desjenigen Kraftfahrzeugs, welches den Datensatz an den Server übertragen hat. Beispielsweise ist oder repräsentiert die zweite Größe einen Abstand des Kraftfahrzeugs zur einer Spurmarkierung der Straße oder zu einem Straßenrand. Die erste und/oder die zweite Größe ist beispielsweise als ein Parameter, insbesondere als eine Zahl ausgebildet.

Verfahrensgemäß werden weiterhin die Datensätze der Schwarmdaten in Abhängigkeit deren erster Größe oder in Abhängigkeit deren zweiter Größe in Untergruppen eingeteilt. Zusammenfassend wird jeder Datensatz einer der Untergruppen zugeordnet. Die Anzahl der Untergruppen ist dabei zweckmäßig vorgegeben. Diese Zuordnung erfolgt zweckmäßig anhand einer vordefinierten Zuordnungsfunktion, welche die Einteilung beispielsweise in Abhängigkeit des Wertes oder des Betrags der ersten Größe oder der zweiten Größe durchführt. Insbesondere sind den Untergruppen jeweils die Datensätze zugeordnet, deren ersten oder zweiten Größen in einem vordefinierten Wertebereich liegen.

Aus einer Anzahl an vordefinierten Fahrerprofilen wird eines dieser Fahrerprofile ausgewählt. Beispielsweise wird hierzu eine Eingabe eines Nutzers an einer Eingabeeinrichtung, wie beispielsweise eines Touchdisplays, des Kraftfahrzeugs ausgewertet. Beispielsweise werden diese Fahrerprofile zusätzlich dazu verwendet, um eine Dynamikverhalten des Antriebs des Kraftfahrzeugs einzustellen, wie beispielsweise ein Schaltverhalten eines Getriebes und/oder die Stärke einer Beschleunigung.

Dem gewählten Fahrerprofil wird eine (einzige) der Untergruppen zugeordnet. Anschließend wird anhand der ersten Größen und/oder anhand zweiten Größen derjenigen Datensätze, welche in die dem gewählten Fahrerprofil zugeordnete Untergruppe eingeteilt sind, eine erste Steuergröße für das Fahrerassistenzsystem bestimmt. Zusammenfassend werden die Datensätze in Untergruppen eingeteilt und eine dieser Untergruppen dem gewählten Fahrerprofil zugeordnet. Die Datensätze in der dem Fahrerprofil zugeordneten Untergruppe werden zur Bestimmung der ersten Steuergröße verwendet, wobei die erste Steuergröße anhand deren ersten und/oder zweiten Größen bestimmt wird.

Anschließend wird das Kraftfahrzeug (Ego-Fahrzeug) anhand des Fahrerassistenzsystems in Abhängigkeit der ersten Steuergröße automatisch längsgeführt und/oder automatisch querführt.

Besonders vorteilhaft wird also der Steuerparameter nicht anhand aller Datensätze der Schwarmdaten bestimmt, sondern lediglich anhand der Datensätze einer Untergruppe. Da die Datensätze wiederum in Abhängigkeit deren ersten oder zweiten Größen, beispielsweise deren Beträge, den Untergruppen zugeordnet sind, unterscheiden sich die Datensätze der Untergruppen also in den durch diese Größen abgebildeten Fahrverhalten. Anhand der Eingabe und damit der Auswahl eines Fahrerprofils und der zugeordneten Untergruppe ist es einem Benutzer also ermöglicht, das Verhalten des Fahrerassistenzsystems unterschiedlich einzustellen und/oder dieses anzupassen. Damit einhergehend wird die Akzeptanz einer Fahrt anhand des Fahrerassistenzsystems erhöht.

Gemäß einer besonders geeigneten Weiterbildung des Verfahrens werden bei der Bestimmung der ersten Steuergröße, insbesondere lediglich, die ersten Größen der Datensätze der jeweiligen Untergruppe verwendet. Die erste Steuergröße wird also anhand einer Größe bestimmt, die die Längsdynamik für das Kraftfahrzeug beschreibt.

Weiterhin wird gemäß dieser Weiterbildung eine weitere Steuergröße (zweite Steuergröße) für das Fahrerassistenzsystem in Abhängigkeit, insbesondere lediglich, der zweiten Größen derjenigen Datensätze bestimmt, die zur Bestimmung der ersten Steuergröße verwendet wurden. Die zweite Steuergröße wird also anhand einer Größe bestimmt, die den gefahrenen Pfad beschreibt. Zusammenfassend werden also anhand derjenigen Datensätze, die in die dem gewählten Fahrerprofil zugeordnete Untergruppe eingeteilt sind, sowohl die erste als auch die zweite Steuergröße bestimmt. Mit anderen Worten werden zur Bestimmung der ersten und der zweiten Steuergröße dieselben Datensätze verwendet.

Damit werden vorteilhaft für die Bestimmung der ersten und der zweiten Steuergröße gleiches oder ähnliches Fahrverhalten entsprechend der Einteilung der Datensätze erreicht.

Gemäß einer geeigneten Ausgestaltung des Verfahrens erfolgt die Einteilung der Datensätze in die Untergruppen entsprechend vorgegebenen oder vorgebbarer Perzentilbereiche für die ersten Größen oder für die zweiten Größen. Jeder Untergruppe ist also ein Perzentilbereich zugeordnet. Für die Einteilung werden also die Perzentilbereiche, beispielsweise 0 bis 20% oder 21% bis 40% oder 41% bis 60% oder 61 bis 80% oder 81% bis 100%, für die erste oder für die zweite Größe vorgegeben und alle Datensätze, deren erste Größe oder deren zweiten Größe in einem gemeinsamen Perzentilbereich liegen, einer gemeinsamen Untergruppe zugeordnet. Beispielsweise werden die Perzentilbereiche derart gewählt, dass diese sich nicht überschneiden. Zusammenfassend werden also alle Datensätze entsprechend der Werte deren ersten oder deren zweiten Größen hinsichtlich deren Werte geordnet und anschließend die Datensätze den entsprechenden Perzentilbereichen (und somit den jeweiligen Untergruppen) zugeordnet.

Einem Perzentilbereich "a bis b" werden dabei diejenigen Datensätze zugeordnet, die eine erste Größe oder eine zweite Größe mit einem Wert zwischen dem "a"-Perzentil und dem "b"-Perzentil für die erste oder für die zweite Größe aufweisen.

Beispielsweise wird dem Fahrerprofil für jede Fahrsituation dieselbe Untergruppe zugeteilt. Gemäß einer geeigneten Ausgestaltung des Verfahrens erfolgt alternativ hierzu die Zuordnung einer der Untergruppen zum gewählten Fahrerprofil in Abhängigkeit einer aktuellen Fahrsituation. Die aktuelle Fahrsituation wird beispielsweise mittels einer Auswertung von Messdaten eines Sensors des Kraftfahrzeugs (Ego-Fahrzeugs) oder von Bilddaten dessen Kamera bestimmt. Die aktuelle Fahrsituation wird zweckmäßig kategorisiert, mit anderen Worten klassifiziert, mit noch anderen Worten einer von einer Anzahl an vordefinierten Fahrsituationen zugeteilt, wobei eine solche Klasse beispielsweise eine Kurvenfahrt, ein Anfahren, ein Beschleunigen bei Erkennen eines Verkehrszeichens oder dergleichen ist. Der aktuellen Fahrsituation wird also, insbesondere in Abhängigkeit des gewählten Fahrerprofils, eine der Untergruppen zugeteilt. Zweckmäßig werden für dieselbe Fahrsituation für unterschiedliche Fahrerprofile unterschiedliche Untergruppen zugeteilt.

Zusammenfassend ist auf diese Weise vorteilhaft das Verhalten des Fahrerassistenzsystems, also die automatische Längs- und/oder Querführung auch an die Fahrsituation angepasst.

Gemäß einer besonders zweckmäßigen Weiterbildung des Verfahrens wird eine auf die aktuelle Fahrsituation (zeitlich) folgende, also zukünftig eintretende Fahrsituation bestimmt. Mit anderen Worten wird die folgende Fahrsituation prädiziert. Beispielsweise wird eine Wahrscheinlichkeit bestimmt, mit der die vordefinierten Fahrsituationen eintreten werden, und bei Überschreiten eines Schwellenwerts durch die Wahrscheinlichkeit, die jeweilige vordefinierte Fahrsituation als die folgende Fahrsituation bestimmt. Hierzu werden beispielsweise Messdaten eines Sensors des Kraftfahrzeugs (Ego-Fahrzeugs) oder von Bilddaten dessen Kamera entsprechend ausgewertet.

Weiterhin wird bei dieser Weiterbildung der folgenden Fahrsituation eine der Untergruppen zugeordnet und eine dritte Steuergröße für das Fahrerassistenzsystem anhand den ersten und/oder zweiten Größen der Datensätze dieser Untergruppe bestimmt. Weiterhin wird die dritte Steuergröße verwendet, also das Kraftfahrzeug mittels des Fahrerassistenzsystems in Abhängigkeit der dritten Steuergröße automatisch längs- und/oder quergeführt, (zeitlich) bevor die folgende Fahrsituation eintritt. Dabei erfolgt zweckmäßig der Übergang von der Steuerung anhand der erste Steuergröße zur Steuerung anhand der dritten Steuergröße stetig, insbesondere erfolgt ein stetiger Übergang zwischen der ersten und der dritten Steuergröße.

Auf diese Weise ist ein abrupter Übergang, der vom Fahrer als unangenehm empfunden werden kann vermieden oder eine Gefahr dessen zumindest reduziert.

Gemäß einer geeigneten Ausgestaltung des Verfahrens wird bei einer automatischen Längs- und/oder Querführung des Kraftfahrzeugs anhand des Fahrerassistenzsystems, also während das Kraftfahrzeug vom Fahrerassistenzsystems automatisch geführt wird, eine Anzahl an manuellen Eingriffen durch den Fahrer gezählt. Unter einem manuellen Eingriff ist ein manuelles Abbrechen der automatischen Längs- und/oder Querführung und/oder ein manuelles Übersteuern, wie beispielsweise ein manuelles Überlenken und/oder ein manuelles Beschleunigen, zu verstehen.

Wenn die Anzahl an manuellen Eingriffen größer als ein vorgegebener Schwellenwert ist, wird eine vierte Steuergröße für das Fahrerassistenzsystem anhand der ersten Größen und/oder zweiten Größen der Datensätze einer derjenigen Untergruppen bestimmt, die dem gewählten Fahrerprofil nicht zugeordnet sind. Insbesondere werden für die Bestimmung der vierten Steuergröße die Datensätze einer der Untergruppen verwendet, welche einem Perzentilbereich zugeordnet ist, der benachbart oder am nächsten zum Perzentilbereich der dem gewählten Fahrerprofil zugeordneten Untergruppe ist.

Zweckmäßig wird das Fahrerassistenzsystem anschließend in Abhängigkeit der vierten Steuergröße betrieben, also das Kraftfahrzeug in Abhängigkeit der vierten Steuergröße mittels des Fahrerassistenzsystems automatisch längs- und/oder quergeführt.

Zusammenfassend wird also bei einem vergleichsweise oft vorkommenden Eingreifen durch den Fahrer die Untergruppe und entsprechend die Steuergröße angepasst. Weiter zusammenfassend werden die erste Steuergröße und die vierte Steuergröße aus den Datensätzen unterschiedlicher Untergruppen bestimmt.

Gemäß einer zweckmäßigen Ausgestaltung wird eine Änderung vom gewählten Fahrerprofil (aktuelles Fahrerprofil) zu einem anderen, also nächsten, Fahrerprofil durchgeführt, wenn oder sobald der Unterschied zwischen der ersten Steuergröße, also der dem gewählten Fahrerprofil entsprechenden Steuergröße, und einer dem nächsten Fahrerprofil zugeordneten Steuergröße kleiner als ein vorgegebener Schwellenwert ist. Eine solche Änderung des Fahrerprofils erfolgt beispielsweise aufgrund einer Eingabe durch den Fahrer.

Auf diese Weise wird ein Umstellen des Fahrerprofils durch den Fahrer als vergleichsweise angenehm empfunden.

Gemäß einer besonders geeigneten Ausgestaltung des Verfahrens wird zur Bestimmung der ersten Steuergröße der Mittelwert der ersten Größen oder der Mittelwert der zweiten Größen derjenigen Datensätze bestimmt, welche in die dem gewählten Fahrerprofil zugeordnete Untergruppe eingeteilt sind. Der derart bestimmte Mittelwert wird anschließend als die erste Steuergröße verwendet. Die erste Steuergröße ist also der Mittelwert der ersten Größen oder der zweiten Größen derjenigen Datensätze, die in die dem gewählten Fahrerprofil zugeordnete Untergruppe eingeteilt sind.

Zweckmäßig werden die zweite, die dritte, die vierte und/oder die fünfte Steuergröße in analoger Weise bestimmt. Insbesondere ist die zweite Steuergröße der Mittelwert der zweiten Größen derjenigen Datensätze, die in die dem gewählten Fahrerprofil zugeordnete Untergruppe eingeteilt sind. Insbesondere ist die dritte Steuergröße der Mittelwert der ersten Größen oder der zweiten Größen der Datensätze derjenigen Untergruppe, die der folgenden Fahrsituation zugeordnet sind. Insbesondere ist die vierte Steuergröße der Mittelwert der ersten Größen oder der zweiten Größen der Datensätze einer derjenigen Untergruppen, die nicht dem gewählten Fahrerprofil zugeordnet sind. Insbesondere ist die fünfte Steuergröße der Mittelwert der ersten Größen oder der zweiten Größen der Datensätze derjenigen Untergruppen, welcher dem nächsten Fahrerprofil zugeordnet wird.

Gemäß einer geeigneten Ausgestaltung des Verfahrens ist oder umfasst die erste Steuergröße, die zweite Steuergröße, die dritte Steuergröße, die vierte Steuergröße und/oder die fünfte Steuergröße jeweils eine Soll-Geschwindigkeit, eine Soll-Beschleunigung und/oder einen Soll-Pfad (Soll-Kurs) für das Kraftfahrzeug für die automatische Längs- und /oder Querführung des Kraftfahrzeugs. Die Geschwindigkeit, die Beschleunigung und/oder der (zu befahrende) Kurs des Kraftfahrzeugs wird zweckmäßig entsprechend dieser Steuergrößen automatisch, insbesondere ohne ein Führen des Kraftfahrzeugs durch den Fahrer, eingestellt. Der Soll-Pfad wird beispielsweise anhand eines Soll-Abstands zu einer Spurmarkierung auf der Straße repräsentiert. Der Soll-Pfad dient also der Spurführung des Fahrzeugs.

Ein weiterer Aspekt der Erfindung betrifft ein solches System. Das System umfasst also das Kraftfahrzeug und den Server. Dabei weisen das Kraftfahrzeug und der Server Mittel zur Durchführung des Verfahrens in einer der oben dargestellten Varianten auf. Insbesondere umfassen das Kraftfahrzeug und der Server jeweils eine Steuereinheit (Controller) als die Mittel. Beispielsweise ist oder umfasst dabei das Fahrerassistenzsystem des Kraftfahrzeugs dessen Steuereinheit.

Zweckmäßig umfasst der Server ein mit dessen Steuereinheit datenüberragungstechnisch verbundenes computerlesbares Medium, beispielswiese eine Festplatte, auf dem die Schwarmdaten hinterlegt sind. Weiterhin ist zweckmäßig auf dem computerlesbaren Medium des Servers sowie auf einem computerlesbaren Medium des Kraftfahrzeugs, beispielsweise eine weitere Festplatte, jeweils ein Computerprogramm gespeichert, wobei die Computerprogramme Befehle umfassen, die bewirken, dass das System die Schritte des Verfahrens ausführt.

Nachfolgend werden Ausführungsbeispiele der Erfindung anhand einer Zeichnung näher erläutert. Darin zeigen:
- Fig. 1: schematisch ein System, welches ein Kraftfahrzeug mit einem Fahrerassistenzsystem für eine automatische Längs- und/oder Querführung sowie einen kraftfahrzeugexternen Server aufweist, auf dem Schwarmdaten hinterlegt sind,
- Fig. 2: in einem Flussdiagramm einen Verfahrensablauf zum Betrieb des Systems gemäß einer ersten Variante, und
- Fig. 3: in einem Flussdiagramm einen Verfahrensablauf zum Betrieb des Systems gemäß einer zweiten Variante.
Einander entsprechende Teile und Größen sind in allen Figuren stets mit gleichen Bezugszeichen versehen.

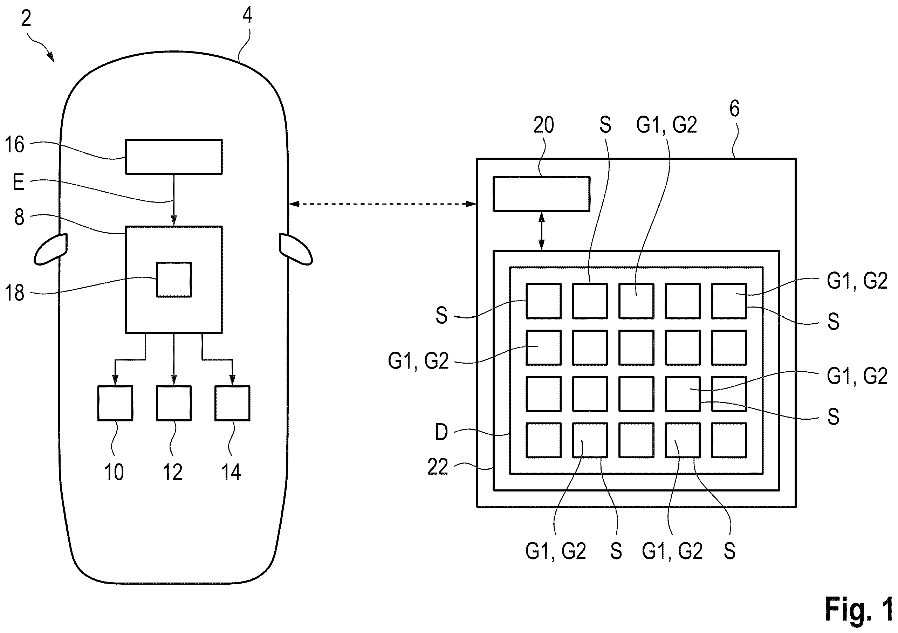

In der Fig. 1 ist schematisch ein System 2 dargestellt, welches ein Kraftfahrzeug 4 sowie einen zu diesem externen Server 6 umfasst. Das Kraftfahrzeus 4 ist signal- und/oder datenübertragungstechnisch mit dem Server 6 verbindbar und/oder verbunden.

Das Kraftfahrzeug 4 umfasst ein Fahrerassistenzsystem 8. Dieses ist dazu vorgesehen und eingerichtet, das Kraftfahrzeug 4 automatisch längs- und/oder querzuführen. Hierzu ist das Fahrerassistenzsystem 8 mit einem Antrieb 10, einer Bremse 12 und/oder einer Lenkung 14 des Kraftfahrzeugs 4 verbunden und kann den Antrieb 10, die Bremse 12 und/oder die Lenkung 14 ansteuern.

Das Kraftfahrzeug 4 umfasst zudem eine Eingabeeinrichtung 16, wie beispielsweise einen Knopf, einen Hebel oder ein Touchdisplay, so dass ein Benutzer des Kraftfahrzeugs 4 eine Eingabe E tätigen kann.

Weiterhin weist das Kraftfahrzeug 4 eine (erste) Steuereinheit 18 auf, die insbesondere als Controller ausgebildet ist. Diese ist gemäß dem hier dargestellten Ausführungsbeispiel in das Fahrerassistenzsystem 8 integriert. Alternativ hierzu ist die erste Steuereinheit 18 separat zum Fahrerassistenzsystem 8, aber signal- und/oder datenübertragungstechnisch mit diesem verbunden.

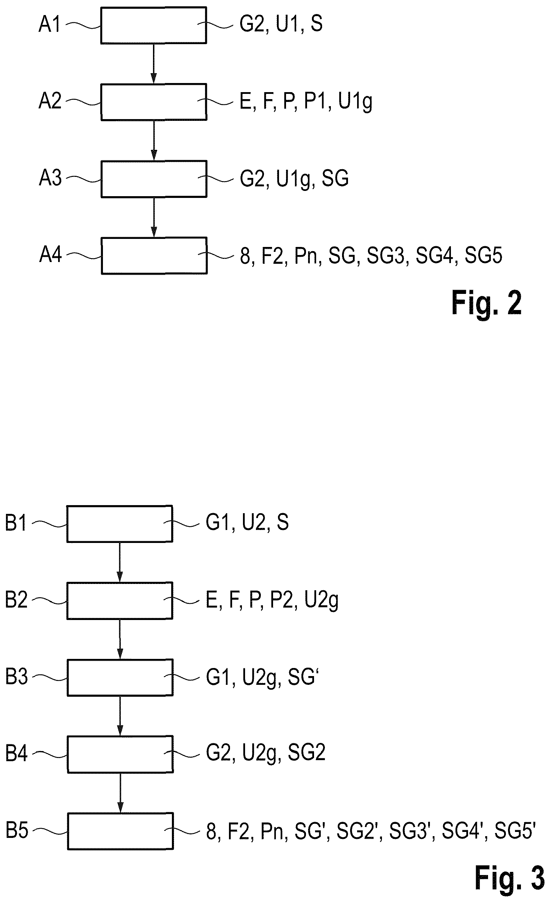

Der Server 6 umfasst eine (zweite) Steuereinheit 20, die insbesondere als Controller ausgebildet ist. Dabei ist das Kraftfahrzeug 4, insbesondere dessen erste Steuereinheit 18, datenübertragungstechnisch mit dem Server 6, insbesondere dessen zweiter Steuereinheit 20, verbindbar und/oder verbunden, was in der Fig. 1 anhand des strichliniert dargestellten Doppelpfeils repräsentiert ist. Die beiden Steuereinheiten 18, 20 bilden Mittel anhand denen das System 2 entsprechend der in den Figuren 2 und 3 beschriebenen Verfahren betrieben werden kann und/oder wird.

Weiterhin umfasst der Server 6 ein mit dessen Steuereinheit 20 verbundenes computerlesbares Medium 22 (Speicher 22), beispielsweise einen nicht-flüchtigen Speicher wie eine Festplatte. Auf dem computerlesbaren Medium 22 sind Schwarmdaten D gespeichert. Somit sind Schwarmdaten D auf dem Server 6 bereitgestellt. Die Schwarmdaten D umfassen dabei Datensätze S, insbesondere eine Vielzahl an Datensätzen S, von denen zum Zwecke einer besseren Übersicht lediglich 20 in der Fig. 1 dargestellt sind. Jeder der Datensätze S stellt eine erste Größe G1 und zusätzlich oder alternativ zur ersten Größe eine zweite Größe G2 dar.

Die erste Größe G1 ist dabei eine Größe über eine Längsdynamik, beispielsweise eine Geschwindigkeit oder eine Längsbeschleunigung am aktuellen Ort des Kraftfahrzeugs 4 des Systems 2. Die zweite Größe G2 ist eine Größe über einen Pfad am aktuellen Ort des Kraftfahrzeugs 4 des Systems 2. Der Pfad wird beispielsweise als ein Abstand zur einer Spurmarkierung der Straße oder zu einem Straßenrand repräsentiert. Die erste und/oder die zweite Größe G1, G2 ist beispielsweise jeweils als ein Parameter, insbesondere als eine Zahl, ausgebildet.

In der Fig. 2 ist eine erste Variante eines Verfahrens zum Betrieb des Systems 2 der Fig. 1 dargestellt.

In einem ersten Schritt A1 werden, insbesondere anhand des Servers 6, die auf dem Server 6 bereitgestellten Datensätze S der Schwarmdaten D in Abhängigkeit deren zweiter Größe G2 in Untergruppen U1 eingeteilt. Also wird jeder Datensatz S einer Untergruppe U1 zugeteilt (zugeordnet).

Diese Zuordnung erfolgt anhand einer vordefinierten und zweckmäßig auf dem computerlesbaren Medium 22 hinterlegten Zuordnungsfunktion, welche die Einteilung beispielsweise in Abhängigkeit des Wertes oder des Betrags der zweiten Größe G2 durchführt.

Gemäß dem hier dargestellten Ausführungsbeispiel werden alle Datensätze S hierzu beispielsweise dem Wert deren zweiter Größe G2 nach geordnet und für jeden Datensatz S das jeweilige Perzentil für dessen zweite Größe G2 bestimmt.

Weiterhin sind, zweckmäßig sich nicht überschneidende, Perzentilbereiche vorgegeben, wobei jeder Untergruppe U1 einer der Perzentilbereiche zugeordnet ist. Jeder Datensatz S wird demjenigen Perzentilbereich (und somit derjenigen Untergruppe U1) zugeordnet, in welchem das bestimmte Perzentil für dessen zweite Größe G2 liegt. Zusammenfassend erfolgt die Einteilung der Datensätze S in die Untergruppen U1 entsprechend vorgegebener Perzentilbereiche für die zweiten Größen G2.

Weiterhin ist eine Anzahl an Fahrerprofilen P vordefiniert. In einem zweiten Schritt A2 wird eines dieser Fahrerprofile P anhand einer Eingabe E durch einen Benutzer des Kraftfahrzeugs 4 ausgewählt. Das gewählte Fahrerprofil wird im Folgenden auch als gewähltes Fahrerprofil P1 bezeichnet. Die Eingabe E erfolgt dabei zweckmäßig anhand der Eingabeeinrichtung 16 des Kraftfahrzeugs 4. Insbesondere werden Daten über das gewählte Fahrerprofil P1 vom Kraftfahrzeug 4 an den Server 6 übertragen.

Dem gewählten Fahrerprofil P1 wird in vorbestimmter Weise oder entsprechend einer weiteren Eingabe des Benutzers an der Eingabeeinrichtung 16 eine der Untergruppen U1 zugeordnet.

Optional und bevorzugt erfolgt die Zuordnung einer der Untergruppen U1 zum gewählten Fahrerprofil P1 in Abhängigkeit einer aktuellen Fahrsituation F des Kraftfahrzeugs 4. Diese Zuordnung erfolgt beispielsweise in vorbestimmter Weise oder entsprechend einer Eingabe des Benutzers. Zusammenfassend wird dem gewählten Fahrerprofil P1 eine der Untergruppen U1 zugeordnet, wobei diese Zuordnung optional abhängig von der aktuellen Fahrsituation F des Kraftfahrzeugs 4 ist. Weiter zusammenfassend wird eine der Untergruppen U1 entsprechend des gewählten Profils und ggf. entsprechend der Fahrsituation F ausgewählt. Diese Untergruppe U1 wird im Folgenden auch als ausgewählte Untergruppe U1g bezeichnet.

Die aktuelle Fahrsituation F wird dabei beispielsweise anhand von Sensordaten eines Sensors oder anhand von Bilddaten einer Kamera des Kraftfahrzeugs 4, beispielsweise durch das Fahrerassistenzsystem 8 bestimmt.

Die Fahrsituation F stellt beispielsweise eine Geradeausfahrt, ein Anfahren, eine Kurvenfahrt, oder eine Geschwindigkeitsanpassung an eine geänderte zugelassene Maximalgeschwindigkeit dar.

Der Schritt A2 kann dabei zeitgleich, zeitlich vorher oder zeitlich nach dem Schritt A1 erfolgen.

In einem dritten Schritt A3 werden anhand der zweiten Größen G2 der Datensätze S der ausgewählten Untergruppe U1g eine erste Steuergröße SG für das Fahrerassistenzsystem 8 bestimmt. Hierzu wird der Mittelwert der zweiten Größen G2 dieser Datensätze S bestimmt, und dieser Mittelwert als die erste Steuergröße SG verwendet. Die erste Steuergröße SG stellt also einen mittleren Pfad dar, der (lediglich) aus den Datensätze S der ausgewählten Untergruppe U1g bestimmt wird. Diese erste Steuergröße SG wird als Soll-Pfad für das Kraftfahrzeug 4 für die automatische Längs- und /oder Querführung durch das Fahrerassistenzsystem 8 verwendet.

Entsprechend wird in einem vierten Schritt A4 das Kraftfahrzeug 4 anhand des Fahrerassistenzsystems 8 in Abhängigkeit der ersten Steuergröße SG, also entlang des Soll-Pfads, automatisch längs- und/oder querführt.

Optional wird während des Schritts A4 eine auf die aktuelle Fahrsituation F folgende Fahrsituation F2, also eine zukünftige Fahrsituation, die noch nicht eingetreten ist, bestimmt. Mit anderen Worten wird die folgende Fahrsituation F2 prädiziert. In analoger Weise zur Bestimmung der ersten Steuergröße SG wird für die folgende Fahrsituation F2 für das gewählte Fahrerprofil eine der Untergruppen U1 in vorbestimmter Weise oder entsprechend einer Eingabe des Fahrers zugeordnet. Eine dritte Steuergröße SG3 wird anhand der zweiten Größen G2 der Datensätze S dieser Untergruppe U1 bestimmt, indem der Mittelwert dieser zweiten Größen 2 berechnet wird. Diese dritte Steuergröße SG3 wird verwendet, bevor die folgende Fahrsituation F2 eintritt, insbesondere wird das Kraftfahrzeug 4 anhand des Fahrerassistenzsystems 8 in Abhängigkeit der dritten Steuergröße SG3, und nicht weiter in Abhängigkeit der ersten Steuergröße SG automatisch längs- und/oder querführt.

Optional - und zweckmäßig, wenn die Auswahl einer der Untergruppen, also die Zuordnung einer der Untergruppen U1 zum gewählten Fahrerprofil P1, entsprechend einer (manuellen) Eingabe durch den Fahrer erfolgt - wird eine Anzahl an manuellen Eingriffen durch den Fahrer gezählt, während das Kraftfahrzeug 4 anhand des Fahrerassistenzsystems 8 automatisch längs- und/oder quergeführt wird. Wenn die Anzahl an manuellen Eingriffen größer als ein vorgegebener Schwellenwert ist, wird eine vierte Steuergröße SG4 für das Fahrerassistenzsystem 8 bestimmt und das Kraftfahrzeug 4 in Abhängigkeit dieser vierten Steuergröße SG4 automatisch längs- und/oder quergeführt.

Hierbei wird als die vierte Steuergröße SG4 der Mittelwert der zweiten Größen G2 der Datensätze S einer der Untergruppen U1 verwendet, die nicht für die Bestimmung der ersten Steuergröße SG verwendet wurde, also die nicht der gewählten Untergruppe U1g zugeordnet sind. Zusammenfassend werden die erste Steuergröße SG und die vierte Steuergröße SG4 aus den Datensätzen S unterschiedlicher Untergruppen U1 bestimmt.

Optional erfolgt während des Schrittes A4 eine Änderung vom gewählten Fahrerprofil P1 zu einem nächsten Fahrerprofil Pn. Beispielsweise erfolgt dies aufgrund einer Eingabe durch den Fahrer. Diese Änderung wird dann durchgeführt, wenn oder sobald der Unterschied zwischen der aktuell verwendeten Steuergröße, insbesondere der ersten Steuergröße SG, und einer dem nächsten Fahrerprofil Pn zugeordneten fünften Steuergröße SG5 kleiner als ein vorgegebener Schwellenwert ist. Die fünfte Steuergröße SG5 ist insbesondere der Mittelwert der zweiten Größen G2 der Datensätze S derjenigen Untergruppe U1, welche dem nächsten Fahrerprofil Pn in vorbestimmter Weise zugeordnet ist.

In einer alternativen zweiten Variante des Verfahrens, die in der Fig. 3 dargestellt ist, werden in einem ersten Schritt B1, insbesondere anhand des Servers 6, die auf dem Server 6 bereitgestellten Datensätze S der Schwarmdaten D in Abhängigkeit deren erster Größe G1 in Untergruppen U2 eingeteilt. Diese Zuordnung erfolgt anhand einer vordefinierten und zweckmäßig auf dem computerlesbaren Medium 22 hinterlegten Zuordnungsfunktion, welche die Einteilung beispielsweise in Abhängigkeit des Wertes oder des Betrags der ersten Größe G1 durchführt. Gemäß dem hier dargestellten Ausführungsbeispiel werden hierzu die Datensätze S dem Wert deren erster Größe G1 nach geordnet und für jeden Datensatz S das jeweilige Perzentil für dessen zweite Größe G1 bestimmt.

Weiterhin sind, zweckmäßig sich nicht überschneidende, Perzentilbereiche vorgegeben, wobei jeder Untergruppe U2 einer der Perzentilbereiche zugeordnet ist. Jeder Datensatz S wird demjenigen Perzentilbereich (und somit derjenigen Untergruppe U2) zugeordnet, in welchem das bestimmte Perzentil für dessen erste Größe G1 liegt. Zusammenfassend erfolgt die Einteilung der Datensätze S in die Untergruppen U2 entsprechend vorgegebener Perzentilbereiche für die ersten Größen G1.

In analoger Weise zum Verfahren gemäß der Fig. 2 ist die Anzahl an Fahrerprofilen P vordefiniert, wobei in einem zweiten Schritt B2 eines dieser Fahrerprofile P anhand einer Eingabe E durch einen Benutzer des Kraftfahrzeugs 4 ausgewählt wird. Das gewählte Fahrerprofil wird im Folgenden auch als gewähltes Fahrerprofil P2 bezeichnet. Die Eingabe erfolgt dabei zweckmäßig anhand der Eingabeeinrichtung 16 des Kraftfahrzeugs 4. Insbesondere werden Daten über das gewählte Fahrerprofil P2 vom Kraftfahrzeug 4 an den Server 6 übertragen.

Dem gewählten Fahrerprofil P2 wird in vorbestimmter Weise oder entsprechend einer weiteren Eingabe des Benutzers an der Eingabeeinrichtung 16 eine der Untergruppen U2 zugeordnet.

Optional und bevorzugt erfolgt in analoger Weise zum Verfahren gemäß der Fig. 2 die Zuordnung einer der Untergruppen U2 zum gewählten Fahrerprofil P2 in Abhängigkeit der aktuellen Fahrsituation F des Kraftfahrzeugs 4. Dieses Zuordnung erfolgt beispielsweise in vorbestimmter Weise oder entsprechend einer Eingabe des Benutzers. Zusammenfassend wird dem gewählten Fahrerprofil P2 eine der Untergruppen U2 zugeordnet, wobei diese Zuordnung optional abhängig von der aktuellen Fahrsituation F des Kraftfahrzeugs 4 ist. Weiter zusammenfassend wird eine der Untergruppe U2 entsprechend des gewählten Profils P2 und ggf. entsprechend der aktuellen Fahrsituation F ausgewählt. Diese Untergruppe U2 wird im Folgenden auch als ausgewählte Untergruppe U2g bezeichnet.

Der Schritt B2 kann dabei zeitgleich, zeitlich vorher oder zeitlich nach dem Schritt B1 erfolgen.

In einem dritten Schritt B3 werden anhand der ersten Größen G1 der Datensätze S der ausgewählten Untergruppe U2g eine (weitere) erste Steuergröße SG' für das Fahrerassistenzsystem 8 bestimmt. Hierzu wird der Mittelwert der ersten Größen G1 dieser Datensätze S bestimmt, und dieser Mittelwert als die (weitere) erste Steuergröße SG' verwendet. Diese erste Steuergröße SG' stellt also beispielsweise eine mittlere Geschwindigkeit oder eine mittlere Beschleunigung dar, die (lediglich) aus den Datensätzen S der ausgewählten Untergruppe U2g bestimmt wird. Diese erste Steuergröße SG' wird als Soll-Geschwindigkeit oder als Soll-Beschleunigung für das Kraftfahrzeug 4 für die automatische Längs- und /oder Querführung durch das Fahrerassistenzsystem verwendet. Zusammenfassend werden für die Bestimmung der (weiteren) ersten Steuergröße SG' (lediglich) die ersten Größen G1 verwendet.

In einem vierten Schritt B4 wird eine zweite Steuergröße SG2 für das Fahrerassistenzsystem 8 in Abhängigkeit der zweiten Größen G2 derjenigen Datensätze S bestimmt, die zur Bestimmung der (weiteren) ersten Steuergröße SG' verwendet wurden. Mit anderen Worten werden also die zweiten Größen G2 der Datensätze S der gewählten Untergruppe U2g für die Bestimmung der zweiten Steuergröße SG2 verwendet. Hierbei wird zweckmäßig der Mittelwert der zweiten Größen G2 dieser Datensätze S als die zweite Steuergröße SG2 verwendet. Die zweite Steuergröße SG2 stellt also einen mittleren Pfad dar, der (lediglich) aus den Datensätze S der ausgewählten Untergruppe U2g bestimmt wird. Diese zweite Steuergröße SG2 wird als Soll-Pfad für das Kraftfahrzeug 4 für die automatische Längs- und /oder Querführung durch das Fahrerassistenzsystem verwendet.

Entsprechend wird in einem fünften Schritt B5 das Kraftfahrzeug 4 anhand des Fahrerassistenzsystems 8 in Abhängigkeit der (weiteren) ersten Steuergröße SG' und in Abhängigkeit der zweiten Steuergröße SG2 automatisch längs- und/oder querführt.

Optional wird während des Schritts B5 die auf die aktuelle Fahrsituation F folgende Fahrsituation F2, also eine zukünftige Fahrsituation bestimmt, die noch nicht eingetreten ist. Mit anderen Worten wird die folgende Fahrsituation F2 prädiziert. Der folgenden Fahrsituation F2 wird für das gewählte Fahrerprofil P2 eine der Untergruppen U2 in vorbestimmter Weise oder entsprechend einer Eingabe des Fahrers zugeordnet. Eine (weitere) dritte Steuergröße SG3' wird anhand der ersten Größen G1 der Datensätze S dieser Untergruppe U2 bestimmt, indem der Mittelwert dieser ersten Größen G1 berechnet wird. Diese (weitere) dritte Steuergröße SG3' wird verwendet, bevor die folgende Fahrsituation F2 eintritt, insbesondere wird das Kraftfahrzeug 4 anhand des Fahrerassistenzsystems 8 in Abhängigkeit der (weiteren) dritten Steuergröße SG3', und nicht weiter in Abhängigkeit der (weiteren) ersten Steuergröße SG' automatisch längs- und/oder querführt. Alternativ oder zusätzlich hierzu wird eine (weitere) zweite Steuergröße SG2' anhand der zweiten Größen G2 der Datensätze S dieser Untergruppe U2, also der der folgenden Fahrsituation F2 zugeordneten Untergruppe U2, bestimmt, indem der Mittelwert dieser zweiten Größen G2 berechnet wird. Diese weitere zweite Steuergröße SG2' wird verwendet, bevor die folgende Fahrsituation F2 eintritt, insbesondere wird das Kraftfahrzeug 4 anhand des Fahrerassistenzsystems 8 in Abhängigkeit der weiteren zweiten Steuergröße SG2', und nicht weiter in Abhängigkeit der zweiten Steuergröße SG2 automatisch längs- und/oder querführt.

Optional - und zweckmäßig, wenn die Auswahl einer der Untergruppen U2, also die Zuordnung einer der Untergruppen U2 zum gewählten Fahrerprofil P2, entsprechend einer Eingabe durch den Fahrer erfolgt - wird während des Schritts B5 eine Anzahl an manuellen Eingriffen durch den Fahrer gezählt, während das Kraftfahrzeug 4 anhand des Fahrerassistenzsystems 8 automatisch längs- und/oder quergeführt wird. Wenn die Anzahl an manuellen Eingriffen größer als ein vorgegebener Schwellenwert ist, wird eine (weitere) vierte Steuergröße SG4' für das Fahrerassistenzsystem 8 bestimmt und das Kraftfahrzeug 4 anhand dessen in Abhängigkeit dieser (weiteren) vierten Steuergröße SG4' automatisch längs- und/oder quergeführt. Zweckmäßig wird dann die (weitere) erste Steuergröße SG' oder die zweite Steuergröße SG2 durch die vierte Steuergröße SG4' ersetzt.

Hierbei wird zweckmäßig als die (weitere) vierte Steuergröße SG4' der Mittelwert der ersten Größen G1 oder der zweiten Größen G2 der Datensätze S einer der Untergruppen U2 verwendet, die nicht für die Bestimmung der ersten Steuergröße SG' verwendet wurde, also nicht der gewählten Untergruppe U2g zugeordnet sind. Zusammenfassend werden die erste Steuergröße SG' und die (weitere) vierte Steuergröße SG4' aus den Datensätzen S unterschiedlicher Untergruppen U1 bestimmt.

Optional erfolgt während des Schrittes B5 eine Änderung vom gewählten Fahrerprofil P2 zum nächsten Fahrerprofil Pn. Beispielsweise erfolgt dies aufgrund einer Eingabe durch den Fahrer. Diese Änderung wird dann durchgeführt, wenn oder sobald der Unterschied zwischen der aktuell verwendeten Steuergröße, insbesondere der ersten Steuergröße SG' oder der zweiten Steuergröße SG2, und einer dem nächsten Fahrerprofil Pn zugeordneten (weiteren) fünften Steuergröße SG5' kleiner als ein vorgegebener Schwellenwert ist. Die (weitere) fünfte Steuergröße SG5' ist insbesondere der Mittelwert der ersten Größen G1 oder der zweiten Größen G2 der Datensätze S derjenigen Untergruppe U2, welche dem nächsten Fahrerprofil Pn in vorbestimmter Weise zugeordnet ist. Das Kraftfahrzeug 4 wird dann in Abhängigkeit dieser (weiteren) fünften Steuergröße SG5' automatisch längs- und/oder quergeführt.

Die erste Steuergröße SG, SG', die zweiten Steuergrößen SG2, SG2', die dritte Steuergrößen SG3, SG3', die vierten Steuergrößen SG4, SG4' und/oder die fünften Steuergrößen SG5, SG5' werden zweckmäßig jeweils anhand des Servers 6, insbesondere dessen Steuereinheit 20, bestimmt, und an das Kraftfahrzeug 4, insbesondere an dessen Fahrerassistenzsystem 8, übertragen.

Die Erfindung ist nicht auf die vorstehend beschriebenen Ausführungsbeispiele beschränkt. Vielmehr können hieraus im Rahmen der Ansprüche auch andere Varianten der Erfindung vom Fachmann abgeleitet werden, ohne den Gegenstand der Erfindung zu verlassen. Insbesondere sind ferner alle im Zusammenhang mit den Ausführungsbeispielen und/oder in den Ansprüchen beschriebenen Einzelmerkmale auch auf andere Weise miteinander kombinierbar, ohne den Gegenstand der Erfindung zu verlassen.

### Bezugszeichenliste

- 2: System
- 4: Kraftfahrzeug
- 6: Server
- 8: Fahrerassistenzsystem
- 10: Antrieb
- 12: Bremse
- 14: Lenkung
- 16: Eingabeeinrichtung
- 18: Steuereinheit des Kraftfahrzeugs
- 20: Steuereinheit des Servers
- 22: computerlesbares Medium

- D: Schwarmdaten
- E: Eingabe
- S: Datensatz
- G1: erste Größe
- G2: zweite Größe
- U1, U2: Untergruppe
- U1g, U2g: gewählte Untergruppe
- P: Fahrerprofil
- SG, SG': erste Steuergröße
- SG2, SG2': zweite Steuergröße
- SG3, SG3': dritte Steuergröße
- SG4, SG4': vierte Steuergröße
- SG5, SG5': fünfte Steuergröße
- F: aktuelle Fahrsituation
- F2: folgende Fahrsituation
- P: Fahrerprofil
- P1, P2: gewähltes Fahrerprofil
- Pn: nächstes Fahrerprofil

- A1: Einteilung der Datensätze in Untergruppen
- A2: Auswahl eines Fahrerprofils
- A3: Bestimmen der ersten Steuergröße
- A4: Automatische Führung durch das Fahrerassistenzsystems
- B1: Einteilung der Datensätze in Untergruppen
- B2: Auswahl eines Fahrerprofils
- B3: Bestimmen der ersten Steuergröße
- B4: Bestimmen der zweiten Steuergröße
- B5: Automatische Führung durch das Fahrerassistenzsystems

## Patentansprüche

1. Verfahren zum Betrieb eines Systems (2) mit einem Kraftfahrzeug (4) sowie mit einem Server (6),
- wobei Schwarmdaten (D) mit Datensätzen (S) auf dem Server bereitgestellt sind, wobei jeder Datensatz (S) eine, insbesondere dem aktuellen Ort des Kraftfahrzeugs (4) zugeordnete, erste Größe (G1) über eine Längsdynamik und/oder eine, insbesondere dem aktuellen Ort des Kraftfahrzeugs (4) zugeordnete, zweite Größe (G2) über einen gefahrenen Pfad darstellt,
- wobei die Datensätze (S) in Abhängigkeit deren erster Größe (G1) oder in Abhängigkeit deren zweiter Größe (G2) in Untergruppen (U1,U2) eingeteilt werden,
- wobei aus einer Anzahl vordefinierter Fahrerprofile (P) eines der Fahrerprofile (P1,P2) anhand einer Eingabe (E) ausgewählt wird,
- wobei dem gewählten Fahrerprofil (P1,P2) eine der Untergruppen (U1g,U2g) zugeordnet wird,
- wobei anhand der ersten Größen (G1) und/oder zweiten Größen (G2) derjenigen Datensätze (S), welche in die dem gewählten Fahrerprofil (p1,P2) zugeordnete Untergruppe (U1g,U2g) eingeteilt sind, eine erste Steuergröße (SG,SG') für ein Fahrerassistenzsystem (8) zur automatischen Längsführung und/oder automatischen Querführung bestimmt wird,
- wobei das Kraftfahrzeug (4) anhand des Fahrerassistenzsystems (8) in Abhängigkeit der ersten Steuergröße (SG;SG') automatisch längs- und/oder querführt wird.

2. Verfahren nach Anspruch 1,
**dadurch gekennzeichnet,**
- **dass** bei der Bestimmung der ersten Steuergröße (SG') die ersten Größen (G1) verwendet werden, und
- **dass** eine zweite Steuergröße (SG2) für das Fahrerassistenzsystem (8) in Abhängigkeit der zweiten Größen (G2) derjenigen Datensätze (S) bestimmt wird, die zur Bestimmung der ersten Steuergröße (SG') verwendet wurden.

3. Verfahren nach Anspruch 1 oder 2,
**dadurch gekennzeichnet,**
**dass** die Einteilung der Datensätze (S) in die Untergruppen (U1,U2) entsprechend vorgegebener Perzentilbereiche für die ersten Größen (G1) oder der zweiten Größen (G2) erfolgt.

4. Verfahren nach einem der Ansprüche 1 bis 3,
**dadurch gekennzeichnet,**
**dass** die Zuordnung einer der Untergruppen (U1,U2) zum gewählten Fahrerprofil (P1,P2) in Abhängigkeit einer aktuellen Fahrsituation (F) erfolgt.

5. Verfahren nach Anspruch 4,
**dadurch gekennzeichnet,**
- **dass** eine auf die aktuelle Fahrsituation (F) folgende Fahrsituation (F2) bestimmt wird,
- **dass** der folgenden Fahrsituation (F2) eine der Untergruppen zugeordnet und eine dritte Steuergröße (SG3,SG3') anhand der ersten Größen (G1) und/oder anhand der zweiten Größen (G2) der Datensätze (S) dieser Untergruppe (U1,U2) bestimmt wird, und
- **dass** die dritte Steuergröße (SG3,SG3') verwendet wird, bevor die folgende Fahrsituation (F2) eintritt.

6. Verfahren nach einem der Ansprüche 1 bis 5,
**dadurch gekennzeichnet,**
**dass** bei einer automatischen Längs- und/oder Querführung des Kraftfahrzeugs (4) anhand des Fahrerassistenzsystems (8) eine Anzahl an manuellen Eingriffen durch den Fahrer gezählt wird, wobei anhand der ersten Größen (G1) oder zweiten Größen (G2) der Datensätze (S) einer derjenigen Untergruppen (U1,U2), die nicht dem gewählten Fahrerprofil (Pi) zugeordnet sind, eine vierte Steuergröße (SG4, SG4') für das Fahrerassistenzsystem (8) bestimmt wird, wenn die Anzahl an manuellen Eingriffen größer als ein vorgegebener Schwellenwert ist.

7. Verfahren nach einem der Ansprüche 1 bis 6,
**dadurch gekennzeichnet,**
**dass** eine Änderung vom gewählten Fahrerprofil (P1,P2) zu einem nächsten Fahrerprofil (Pn) durchgeführt wird, wenn oder sobald der Unterschied zwischen der dem gewählten Fahrerprofil (P1,P2) zugeordneten Steuergröße (SG) und einer dem nächsten Fahrerprofil (Pn) zugeordneten fünften Steuergröße (SG5,SG5') kleiner als ein Schwellenwert ist.

8. Verfahren nach einem der Ansprüche 1 bis 7,
**dadurch gekennzeichnet,**
**dass** zur Bestimmung der ersten Steuergröße (SG,SG') der Mittelwert der ersten Größen (G1) oder der zweiten Größen (G2) derjenigen Datensätze (S) bestimmt wird, welche in die dem gewählten Fahrerprofil (F) zugeordnete Untergruppe (U1,U2) eingeteilt sind, und dass dieser Mittelwert als die erste Steuergröße (SG,SG') verwendet wird.

9. Verfahren nach einem der Ansprüche 1 bis 8,
**dadurch gekennzeichnet,**
**dass** die erste Steuergröße (SG,SG'), die zweite Steuergröße (SG2,SG2'), die dritte Steuergröße (SG3,SG3'), die vierte Steuergröße (SG4,SG4') und/oder die fünfte Steuergröße (SG5,SG5') jeweils eine Soll-Geschwindigkeit, eine Soll-Beschleunigung und/oder einen Soll-Pfad für das Kraftfahrzeug (4) für die automatische Längs- und /oder Querführung des Kraftfahrzeugs ist oder umfasst.

10. System (2) mit einem Kraftfahrzeug (4) und mit einem Server (6), wobei das Kraftfahrzeug und der Server Mittel (18, 20) zur Durchführung des Verfahrens nach einem der Ansprüche 1 bis 9 aufweisen.
